# EUROPEAN PATENT APPLICATION

(11) **EP 1 793 388 A2**
(43) Date of publication of application: **06.06.2007**
(21) Application number: 06124429.9
(22) Date of filing: 21.11.2006
(51) Int. Cl.: G21K 4/00, C09K 11/61

(54) **Method of stabilising storage phosphor panels.**

(30) Priority: 30.11.2005 EP 05111500
(71) Applicant: Agfa HealthCare NV, 2640 Mortsel (BE)
(72) Inventor: Tahon, Jean-Pierre, 2640 Mortsel (BE); Leblans, Paul, 2640 Mortsel (BE)
(74) Representative: Theunis, Patrick

(57) **Abstract**

In a method of increasing humidity stability of a storage phosphor panel having a phosphor layer coated onto a support by vapour depositing raw phosphor precursor materials of a matrix and an activator component from one or more crucible(s) and/or crucible unit(s) in a vapour deposition apparatus, after ending vapour depositing, an additional "over-annealing" step is performed in humidity conditions wherein more than 10 g of water per cubic meter of dry conditioning air is present.

## Description

### FIELD OF THE INVENTION

The present invention relates to a solution for improving the intrinsic humidity stability of a vapour deposited storage phosphor plate. More particularly the invention is related with a method in order to stabilise a binderless needle-shaped phosphor layer having a matrix component which is normally very sensitive to humidity, wherein said measures are performed in the absence of any surface protective layer upon said storage phosphor plate.

### BACKGROUND OF THE INVENTION

A well-known use of phosphors is in the production of X-ray images. In a conventional radiographic system an X-ray radiograph is obtained by X-rays transmitted image-wise through an object and converted into light of corresponding intensity in a so-called intensifying screen or X-ray conversion screen wherein phosphor particles absorb the transmitted X-rays and convert them into visible light and/or ultraviolet radiation to which a photographic film is more sensitive than to the direct impact of X-rays.

According to another method of recording and reproducing an X-ray pattern as disclosed e.g. in US-A 3,859,527 a special type of phosphor is used, known as a photostimulable phosphor, which being incorporated in a panel, is exposed to incident pattern-wise modulated X-ray beam and as a result thereof temporarily stores energy contained in the X-ray radiation pattern. At some interval after the exposure, a beam of visible or infra-red light scans the panel to stimulate the release of stored energy as light that is detected and converted to sequential electrical signals which can be processed to produce a visible image. For this purpose, the phosphor should store as much as possible of the incident X-ray energy and emit as little as possible of the stored energy until stimulated by the scanning beam. This is called "digital radiography" or "computed radiography".

In both kinds of radiography it is preferred to be able to choose the phosphor that will be used on the basis of its speed and image quality without having to bother about its sensitivity for external influences as temperature and humidity, thereby reckening upon a long lasting life-time.

Sensitivity to humidity, in particular, is known to apply e.g. for alkali metal salts. As photostimulable or storage phosphors making use of such salts as matrix components have regained an enhanced interest during the last five years as is e.g. illustrated in US-A 6,802,991, it is clear that one of the first problems to overcome was to protect such a storage phosphor plate from moisture by covering said panel with a protective layer, e.g. with a moistureproof parylene (poly-p-xylylene) layer as in US-A 6,710,356 and in US-Applications 2003/0038249 and 2005/0040340; with a water-repellent layer as in US-Application 2004/0183029 or by a sealing procedure as in US-Application 2003/0152692.

Further measures related therewith in order to optimise said protection have been disclosed in US-Applications 2005/0067584, by providing more protective layers as in US-A 6,822,243 and in US-Applications 2003/0071228 and 2003/0146395 and/or to provide a packaging for such panels as has been described in US-Application 2004/0070328. As a material used in the protective layer, and e.g. laminated thereto, polyalkylene film, polyester film, poly-methacrylate film, nitrocellulose film, cellulose acetate film and the like may be used and, for example, polypropylene film, polyethylene terephthalate film, polyethylene naphthalate film and the like are preferable from the aspect of transparency and strength. As the protective layer, a material having low permeability of moisture and oxygen, e.g. a film on which silica and/or alumina, is deposited as described in US2004/0108464.

As is known very well by anyone skilled in the art and as is acknowledged in US-Application 2005/0145808 the regression of a latent image becomes fast when the photostimulable phosphor absorbs moisture. As a consequence it would be desired to have very suitable tools, in order to provide intrinsic protection against moisture for the phosphor in itself, before application of external protective measures against moisture afterwards, without however to neglect such external protective measures as a sufficient resistance against physical damage during use of said storage phosphor panel is still present.

Although screens prepared according to the disclosures above do yield screens with acceptable to very good overall quality, the need remains to have a storage phosphor screen combining good intrinsic humidity resistance, a high, nearly constant speed over a long use time period and an ever lasting good image quality.

It is thus more particularly an object of the present invention to provide a binderless needle-shaped storage phosphor panel, wherein a doped alkali halide phosphor, and more particularly, a CsBr:Eu phosphor has the desired stability properties, without being detrimental with respect to speed and image quality.

### SUMMARY OF THE INVENTION

The above-mentioned advantageous effects are realised by providing a method for increasing the intrinsic humidity stability of a storage phosphor panel having a phosphor layer coated onto a support by vapour depositing raw phosphor precursor materials of a matrix and a dopant or activator component from one or more crucible(s) and/or crucible unit(s), the preparation steps of which are set out in claim 1.

More particular features for different preferred embodiments of the invention are set out in the dependent claims.

Further advantages and embodiments of the present invention will become apparent from the following description.

### DETAILED DESCRIPTION OF THE INVENTION

As an advantageous effect of the present invention it has unexpectedly been found that for the same coating amount of phosphor in a vaporisation process, modified according to the method of the present invention, phosphor speed is maintained in that its intrinsic humidity stability is less than 25 %, wherein said humidity stability is expressed as percentage decay of speed, and wherein said decay is determined from differences in speed measured before and after an ageing treatment procedure in a conditioned atmosphere defined by a relatively high temperature and humidity, without protective layer covering said phosphor layer. More preferably a decay of less than 20% after an ageing treatment procedure during a time of about 6 days (144 hours) in an atmosphere having a relative high temperature of about 35°C and a high (tropic) relative humidity of about 80%, is envisaged without providing a protective layer for that vapour deposited binderless phosphor layer.

According to the present invention the method as disclosed provides an increasing humidity stability of a storage phosphor panel having a phosphor layer coated onto a (dedicate substrate) support by vapour depositing raw phosphor precursor materials of a matrix and/or an activator component from one or more crucible(s) and/or crucible unit(s) in a vapour deposition apparatus, when after ending vapour depositing an additional over-annealing step is performed. As has been disclosed in EP-Application No. 05110122, filed October 28, 2005, a crucible unit, besides a crucible, boat or container, further comprises at least a chimney as part of the crucible unit and a slit allowing phosphor precursor raw materials to escape in vaporised form from said crucible unit and to deposit it as a phosphor layer onto said support.

Annealing is known by a person skilled-in-the-art as a procedure wherein an additional energy treatment is given after the end of the vapour deposition. Most performed as an additional energy treatment is a heat treatment, which is performed after vapour deposition. In "normal" annealing procedures, as in US-A 6,730,243 an annealing procedure may be applied wherein after cooling the plate is brought to a temperature between 80°C and 220°C and maintained at that temperature for a time between 10 minutes and 15 hours. In another embodiment as in US-A 2003/186023 a procedure may be applied wherein heating the crystal layer proceeds at a temperature of lower than 300°C but not lower than 50°C for a period of 1 to 8 hours in an inert gas atmosphere or an inert gas atmosphere containing a small amount of oxygen or hydrogen. Furtheron as in US-A 2003/0218139 annealing may be performed at a temperature of 50 to 600°C for at least one hour. As in US-A 2005/0040340 an annealing step may be performed at a temperature of from 80°C to 300°C, and more preferably from 100°C to 200°C. Moreover as described in US-A 2005/0133731 after the deposition procedure is complete, the deposited layer may be subjected to heat treatment (annealing), which is carried out generally at a temperature of 100 to 300°C for 0.5 to 3 hours, preferably at a temperature of 150 to 250°C for 0.5 to 2 hours, under inert gas atmosphere which may contain a small amount of oxygen gas or hydrogen gas. Extreme heat-treatment procedures have been proposed in US-A 2004/0056209, wherein heating to more than 400°C and to less than 700°C under atmospheric pressure seems to be favorable with respect to provide superior moisture resistance to the panel, thus treated.

"Over-annealing" as defined in the present invention proceeds by annealing over a time exceeding a "reference annealing time" at a temperature exceeding a "reference annealing temperature" wherein said "reference annealing time" is set at 4 hours and wherein said "reference annealing temperature" is set at 170°C.

According to the method of the present invention, in one embodiment thereof, said step of over-annealing proceeds by annealing over a time exceeding a "reference annealing time" at a temperature exceeding a "reference annealing temperature", wherein said "reference annealing time" is 4 hours and wherein said "reference annealing temperature" is 170°C and in humidity conditions wherein more than 10 g of water per cubic meter of dry conditioning air is present.

In practical applications, according to the method of the present invention, during said over-annealing step said temperature is at least 180°C and said time is at least 4.5 hours, i.e. 4 hours and 30 minutes.

Alternatively in practical applications, according to the method of the present invention, during said over-annealing step said temperature is at least 200°C and said time is at least 5 hours.

Application of preparation procedures as described in the method of the present invention thus provides an improved humidity stability, expressed or represented as percentage decay of speed (sensitivity decay) of less than 25 %, and, more preferably, as a sensitivity decay of less than 20 %, wherein said decay is determined from differences in speed measured before and after an ageing treatment procedure in a conditioned atmosphere, defined by a relatively high temperature and humidity, without a protective layer for said phosphor layer. Said decay is controlled and calculated by evaluating and comparing sensitivity or speed (obtained as SAL, i.e. "scan average levels") of the storage phosphor plate before and after an ageing treatment procedure in a room having particularly chosen thermal and humidity conditions, e.g. 35°C and 80% RH (relative humidity).

In a further embodiment according to the method of the present invention said phosphor layer is coated with a protective layer.

According to the method of the present invention said storage phosphor panel has an "activator coating weight number" of more than 7,000 and in another embodiment according to the method of the present invention said storage phosphor panel has an "activator coating weight number" of more than 20,000. Said "activator coating weight number" is defined as the product of average activator amount present in a storage phosphor layer of said panel, said amount being expressed in p.p.m. (µg/g) of activator versus matrix component, and weight of coated phosphor, expressed in mg/cm² as has been disclosed in EP-Applications Nos. 05110119 and 05110120, both simultaneously filed October 28, 2005.

According to the method of the present invention said step of vapour depositing raw phosphor precursor materials is performed by a multi-evaporation step. Multi-evaporation is defined herein as evaporating from one and the same crucible or crucibles, in multiple consecutive evaporation steps, raw precursor materials or combinations thereof having the same or a different composition while performing said multiple consecutive evaporation steps. Said consecutive steps are characterised by one or more steps of adding said raw materials or combinations thereof in order to compensate for exhaustion of the crucible content as a consequence of progressively vapour depositing said raw materials as precursors for phosphor vapour deposition. In order to save time it is understood that between those consecutive vaporisation steps, no cleaning of empty or nearly empty crucible(s) takes place. Reason why this kind of "replenishment" of the crucibles is sometimes required, is related with the total volume of the crucible, the volume up to which the said crucible may be filled with raw materials (in order to avoid e.g. spatter) and the coating thickness of the phosphor layer onto the substrate or support whereupon said phosphor should be deposited by the vapour deposition process. Replenishment may alternatively be performed as described in US-A 2004/0224084 wherein it has been established that, even when no change in composition in the thickness direction is desired, it is clear that the crucible(s) become(s) exhausted during the physical vapour deposition process and that "replenishment" of the crucible(s) should be provided, e.g. by addition of raw material components in powdery form, in form of grains or crystals or in form of pastilles containing caked powder or grain mixtures, in favor of maintaining homogeneity during the further evaporation process as otherwise, differences in dopant (Europium) concentrations may appear, while the coating process is running furtheron. Methods referred to and applicable in order to "replenish" the crucible(s) have e.g. been described in US-A 4,430,366, in DE-A 1 98 52362 and in US-A 2003/0024479. So as in a particular method as described in EP-Application No. 05110124, filed October 28, 2005 at least one or a combination of following steps may be performed, said steps being 1) vapour depositing at an increased temperature in one or more crucible unit(s), the temperature exceeding the melting temperature of said matrix raw material with more than 70°C, and 2) performing multi-evaporation; wherein optionally a further step of increasing the temperature in a vaporisation chimney of said crucible unit(s) versus the temperature in said crucible container may be maintained.

In a particular embodiment, in the method of the present invention said multi-evaporation step is performed by replenishing said crucible(s) without a cleaning step inbetween.

Further according to the method of the present invention said raw material precursor is CsX as a matrix component and EuX₂, EuX₃, EuOX or a mixture thereof as activator components, X representing Cl, Br, I or a combination thereof.

In another embodiment according to the method of the present invention said raw precursor material is CsₓEu_{y}X'_{(x+αy)}, wherein x, y and α are integers, wherein x/y is more than 0.25 and wherein α is at least 2 and wherein X' represents Cl, Br, I or a combination thereof.

According to the method of the present invention said storage phosphor is CsBr:Eu.

In one embodiment according to the method of the present invention said vapour deposition proceeds in a batch process.

In another embodiment according to the method of the present invention said vapour deposition proceeds in a continuous process.

In the method according to the present invention as disclosed herein, vapour depositing said phosphor onto said support proceeds by a method selected from the group consisting of physical vapour deposition, chemical vapour deposition and an atomisation technique. Applying said phosphor on a substrate by said methods thus includes thermal vapour deposition, electron beam evaporation, magnetron sputtering, radio frequency sputtering and pulsed laser deposition or atomisation techniques such as spray drying and thermal spraying, without being limited hereto.

As an advantageous effect of the present invention it has unexpectedly been found that for the same coating amount of phosphor in a vaporisation process, modified according to the method of the present invention, an enhanced phosphor speed is measured for a process, even when the more and the less volatile raw precursor materials are evaporated both from one and the same crucible unit and even when it is further conditioned in rather severe conditions of heat and humidity during some time, simulating thereby "normal conditionings" during use over a long period of time.

As already set forth hereinbefore the method of the present invention is performed in batch or in a continuous process.

Independent thereupon a vapour deposition apparatus wherein the method according to the present invention is applied, said apparatus further has, in a preferred embodiment, three lineair chimney heating elements (chimney heaters - advantageously infrared heaters) mounted versus the chimmney outlet of the crucible unit(s), and positioned so that there is no direct path for vaporised particles from said raw materials to escape through the chimney slot outlet, in order to avoid hitting the support and disturbing the deposited layer formed by vaporisation onto said support.

Such an arrangement is more particularly required in order to avoid spatter of raw precusor materials, wherein the chimney heaters are acting as baffles. In another embodiment a refractory plate, e.g. a tantalum plate, is mounted internally in the crucible under the baffling chimney heaters. Said crucible and said plate is further mounted between an electrode pair, in order to provide further homogeneous heating over the whole heat-conducting assembly, in favor of homogeneous deposition of phosphor or scintillator material. In a vapour deposition apparatus wherein the method according to the present invention is applied, said (controllable) slot outlet is a rectangular slot outlet. It is a particular advantage that in a vapour deposition apparatus wherein the method according to the present invention is applied, said lineair chimney heating elements are movable in an upward or downward position.

In the case wherein the vapour deposition apparatus provides ability for one carrier roller to rotate, in a controlled way, by means of a motor around its axis, whereas other roller(s) is(are) rotating by movement of said one roller; and wherein, while rotating, the position of the flexible substate on the rollers is controlled by means of an optical positioning sensor, coupled back to pressure regulating cylinder(s), providing position adjustment of said flexible substrate, the phosphor layer is prepared in a continuous vapour depositing process as has been described in US-Applications 2004/0219289 2004/0224084.

In another embodiment said substrate is rotating around an axis parallel with or inclined at a well-defined angle verus the vapour stream escaping from the crucible unit(s) present in the batch vapour deposition apparatus. Alternatively the substrate or support may be at a fixed position, whereas the crucible unit(s) may be rotated around a virtual axis parallel with or inclined at a well-defined angle verus an axis perpendicular to said support or substrate.

As a substrate material whereupon the scintillator or phosphor material is deposited in the vapour depositing apparatus according to the method of the present invention, use can be made of glass, a ceramic material, a polymeric material or a metal; more preferably a material selected from the group consisting of glass, polyethylene therephthalate, polyethylene naphthalate, polycarbonate, polyimide, carbon fibre-reinforced plastic sheets, aluminum, Pyrex^{®}, polymethylacrylate, polymethylmethacrylate, sapphire, zinc selenide, Zerodur^{®}, a ceramic layer and a metal or an alloy selected from the group of aluminum, steel, brass, titanium and copper. It should even not be limited thereto as in principle, any metal or synthetic material resisting irreversible deformation, e.g. as by melting, after addition of energy to the extent as commonly applied in the coating process of the present invention, is suitable for use.

Particularly preferred as flexible substrate in method of the present invention is aluminum as a very good heat conducting material allowing a perfect homogeneous temperature over the whole substrate. As particularly useful aluminum substrates, without however being limited thereto, brightened anodised aluminium, anodised aluminium with an aluminium mirror and an oxide package and, optionally, a parylene layer; and anodised aluminium with a silver mirror and an oxide package and, optionally, a parylene layer; available from ALANOD, Germany, are recommended. So, as a preferred, flexible substrate support an anodised aluminum support layer, covered with a protective foil, is recommended. Such an anodised aluminum support layer may have a thickness in the range of from 50 to 500 µm, and more preferably in the range from 200 to 300 µm. Such an anodised aluminum substrate has shown to be particularly favorable indeed with respect to adhesion characteristics with respect to vapour deposited phosphors or scintillators and even bending of that flexible aluminum support coated with a scintillator layer having a thickness of 500 µm up to 1000 µm, does not cause "cracks" or delamination of scintillator or phosphor "flakes". No problems have indeed been encountered with respect to occurrence of undesirable cracks when prepared in the vapour deposition apparatus wherein the method of the present invention is applied.

While vapour deposition proceeds the temperature of the said substrate is maintained in the range from 150°C to 300°C, more preferably in the range from 150°C to 250°C and still more preferably in the range from 180°C to 220°C, envisaging a target temperature of about 200°C, by means of regulable heaters and by an adressable cooling unit installed along the support. As heaters, infrared heaters are advantageously used. In another embodiment more particular use is made of large quartz halogen heaters, present in order to heat the chimney and in order to overcome condensation of vaporised materials, arranged horizontally, e.g. longitudinally, along the said substrate with a reflecting screen behind it.

Further details about continuous or batch vapour deposition processes can be found in EP-A 1 460 642 and US-Application 2004/0224084; and in US-A 6,802,991 respectively. In order to be provide ability to incorporate enough dopant in the vapour deposited layer, the step of heating said precursor raw materials in the crucible in liquid form advantageously proceeds up to a temperature T1, whereas the step of heating said precursor raw materials in vaporised form in the chimney of a crucible unit, proceeds up to a temperature T2, wherein a positive difference in temperature [T2 - T1] is maintained as has been established in EP-Application 05110122, filed October 28, 2005.

It is evident that the composition of the raw material in the container(s) (crucible(s)) of the vapour depositing apparatus wherein the method of the present invention is applied, is chosen in order to provide an end composition or coating composition as desired, wherein said composition is determined by the ratios of raw materials present. Ratios of raw materials are chosen in order to provide the desired chemical phosphor or scintillator composition after deposition of the vaporised raw materials. It is desirable to mix the raw materials in order to get a homogeneous raw mix in the crucible(s) in form of solid powders, grains or granules, or as pastilles having a composition corresponding with the desired ratios of raw materials in order to provide the desired phosphor coated onto the moving substrate material. A milling procedure may be favorable in order to provide a high degree of homogeneity before vaporisation and is therefore recommended. Differing components may also be vaporised from different crucibles or crucible units, arranged in series or in parallel or in a combined arrangement as already suggested before, provided that a homogeneous vapour cloud is presented to the flexible substrate via the vapour stream or flow, deposited by condensation onto said substrate. Two elongated one-part boats having same or different raw material content or raw material mixtures may e.g. be present in series in the moving direction of the web. In another embodiment, if providing a more homogeneous coating profile, boats may be arranged in parallel on one axis or more axes, perpendicular to the moving direction of the support, provided that overlapping evaporation clouds again are providing a vapour stream that becomes deposited onto the support in a phosphor or scintillator layer having a homogeneous thickness, composition and coated amount of said phosphor or scintillator. Presence of more than one crucible may be in favor of ability to supply greater amounts of phosphor or scintillator material to be deposited per time unit, the more when the flexible substrate should pass the vapour flow at a rate, high enough in order to avoid too high temperature increase of the substrate. The velocity or rate at which the substrate passes the container(s) should indeed not be too slow in view of undesired local heating of the substrate support, making deposition impossible, unless sufficient cooling means are present in favor of condensation. The supporting or supported substrate should therefore preferably have a temperature between 50°C and 300°C in order to obtain deposited phosphor or scintillator layers having the desired optimised properties.

It is clear that energy should be supplied to one or more container(s), also known as crucible(s), tray(s) or boat(s), in order to provoke a vapour flow (or stream) of the raw materials present therein, which become vaporised in the sealed vacuum zone: energy is submitted thereto by thermal, electric, or electromagnetic energy sources. As an example of an electromagnetic energy source a diode, a cathodic arc, a laser beam, an electron beam, an ion beam, magnetron radiation or radio frequencies may be used, whether or not pulsed, without however being limited thereto. Electric energy is commonly provided by resistive heating, making use of resistance coils wound around the container(s) or crucible(s) in a configuration in order to get conversion into thermal energy, thereby providing heat transfer to the containers or crucibles filled with the raw materials that should be evaporated. Energy supply to an extent in order to heat the container(s) or crucible(s) up to a temperature in the range from 550°-900°C is highly desired. At those temperatures, it is clear that containers should resist corrosion, so that refractory containers are preferred. Preferred container or crucible materials therefor are tungsten, tantalum, molybdenum and other suitable refractory metals. Energy supply as set forth heats the mixture of raw materials in the crucible to a temperature above 450°C, preferably above 550°C, and even more preferably in the range of 550°C up to 900°C, e.g. at about 700°C.

A cloud of vaporised material, originating from the target raw materials thus escapes as a cloud in form of a flow or stream from the container(s) or crucible(s) in the direction of the moving substrate, where a coated layer is formed by condensation. From the description above it is clear that, in order to obtain a homogeneous coating profile as envisaged, a homogeneous cloud can only be realised when homogeneity is provided in the bulk of the liquefied raw material. As a consequence, a homogeneous distribution of energy supplied over the container is a stringent demand. In a preferred embodiment, in favor of homogeneity, the crucible is in form of a single elongated "boat" with a largest dimension corresponding with the width of the flexible support moving over the said crucible so that at each point of its surface area the momentarily velocity magnitude is constant. If required during or after the deposition process oxygen can be introduced into the vacuum deposition chamber in form of oxygen gas via an inert (argon) gas inlet. More particularly an annealing step inbetween two deposition steps or at the end of the phosphor deposition may be benificial.

An important factor with respect to coating profile, to be obtained on the substrate support in the vapour depositing apparatus wherein the method of the present invention is applied, is the distance between container(s) and moving substrate as the distance determines the profile of the vapour cloud at the position of the flexible substrate. Average values of shortest distances between crucible(s) and substrate may be in the range of from 5 to 10 cm, although further distances up to 20-25 cm are not excluded as favoring temperature control of the substrate. Too large distances may lead to loss of material and decreased yield of the process, whereas too small distances may lead to too high a temperature of the substrate. Moreover care should further be taken with respect to avoiding "spot errors" or "pits", resulting in uneven deposit of phosphors or scintillators, due to spitting of the liquefied raw materials present in the heated container(s). Measures are taken therefore so as to avoid a direct path for vaporised particles from said raw materials to escape through a slot outlet of a crucible or crucible unit and to cause deposition of undesired spots onto the storage phosphor plate or panel as already suggested hereinbefore.

In the vapour depositing apparatus wherein the method of the present invention is applied, vapour deposition of said phosphor or scintillator compositions is initiated by a vapour flow of raw materials from one or more crucible(s), wherein said vapour flow is generated by adding energy to said raw materials and said container(s), by thermal, electric, or electromagnetic energy or a combination thereof. So vapour depositing said phosphor or scintillator compositions advantageously proceeds by physical vapour deposition, by chemical vapour deposition or a by combination of physical and chemical vapour deposition. These techniques, more particularly those related with physical vapour deposition can be applied e.g. as described in "Handbook of Physical Vapour Deposition Processing", 1998, William Andrew Publ..

With respect to the coated phosphor to be obtained in the vapour depositing apparatus wherein the method of the present invention is applied, said phosphor, in one embodiment, is a photostimulable phosphor. A very interesting photostimulable (storage) phosphor that is succesfully deposited in the vapour depositing apparatus wherein the method of the present invention is applied, is a CsBr:Eu phosphor. Raw materials used in the preparation of CsBr:Eu storage phosphor plates or panels are CsBr and between 10⁻³ and 5 mol % of a Europium compound selected from the group consisting of EuX'₂, EuX'₃ and EuOX', X' being a halide selected from the group consisting of F, Cl, Br and I as has been used in the preparation method disclosed in PCT-filing WO 01/03156. Even more preferred is a binderless coating of the selected CsBr:Eu phosphor from CsBr and EuOBr raw materials, wherein the said phosphor is characterised by its particular needle-shaped form. The high degree of crystallinity is easily analysed by X-ray diffraction techniques, providing a particular XRD-spectrum as has been illustrated in US-Application 2001/0007352. Therefore a mixture of CsBr and EuOBr is provided as a raw material mixture in the crucibles, wherein a ratio between both raw materials normally is about 90% by weight of the cheap CsBr and 10% of the expensive EuOBr, both expressed as weight %. It has however been shown that as a function of coating (evaporating) temperature ratios can be adapted in favor of lower material and production cost, without resulting in changes in composition: so higher vaporisation temperatures for the raw material mixture in ratio amounts of 99.5 wt % CsBr and 0.5 wt % EuOBr provide the same result as before.

The preferred CsBr:Eu²⁺ phosphor, obtained after vapour deposition as a needle-shaped phosphor in the vapour depositing apparatus wherein the method of the present invention is applied, is characterised by voids between the needles. In order to fill those voids, measures can be taken as described in US-Application 2003/0168611, wherein voids are partially filled with a polymeric compound; as in US-Application 2003/0183777, wherein vapour deposited pigments like the preferred β-Cu-phthalocyanine nanocrystalline dye compound are filling said voids or as in US-Application 2004/0228963, wherein the voids are at least partially filled with polymeric compounds selected from the group consisting of silazane and siloxazane type polymeric compounds, mixtures thereof and mixtures of said silazane or siloxazane type polymeric compounds with compatible polymeric compounds. More particularly with respect to the said dyes or pigments, vapour deposition thereof can be performed in the vacuum deposition chamber used in the configuration of the production method according to the present invention.

In order to prepare sheets or panels provided with the preferred CsBr:Eu²⁺ phosphor, the vapour depositing apparatus wherein the method of the present invention is applied, starts with mixed raw materials in the crucible(s) comprising, as phosphor precusors, at least wherein CsₓEu_{y}X'_{(x+αy)} is an activator precursor material, wherein x, y and α are integers, wherein x/y is more than 0.25 and wherein α is at least 2 and wherein X' represents Cl, Br, I or a combination thereof CsₓEu_{y}X'_{(x+αy)}, wherein the ratio of x to y exceeds a value of 0.25, wherein α ≥ 2 and wherein X' is a halide selected from the group consisting of Cl, Br and I and combinations thereof.

In another embodiment said mixture of raw materials comprises, as phosphor precursors, at least CsBr and CsₓEu_{y}X'_{(x+αy)}, wherein the ratio of x to y exceeds a value of 0.25, wherein α ≥ 2 and wherein X' is a halide selected from the group consisting of Cl, Br and I and combinations thereof. Methods for preparing and coating desired CsBr:Eu phosphors, wherein use is made of precursors as set forth, have been described in US-Applications 2005/0184250 and 2005/0186329 respectively.

At the moment of deposition, a preferred stimulable phosphor or scintillator layer, prepared in the vapour depositing apparatus wherein the method of the present invention is applied, is a binderless layer. This can be well understood, as at those high temperatures, presence of additional binders besides phosphors or scintillators raw materials in the container(s) would not be practical. It is however not excluded to make use of polymers, showing ability to become vaporised, in order to serve as binder material e.g. between substrate and phosphor or scintillator layer or even between the preferred phosphor or scintillator needles in the coated layer. Moreover when laminating a polymer layer onto the deposited layer, it is not excluded that polymer material is filling, at least in part, the voids between those needles. Furtheron it is not excluded to provide the phosphor or scintillator sheets or panels, before or after cutting in desired formats, with a moisture-resistant layer, in order to protect the moisture-sensitive phosphor layer against deterioration. Particularly preferred layers are e.g. parylene (p-xylylene) layers as described in US-A 6,710,356, whether or not overcoated with a transparent organic layer of silazane or siloxazane type polymeric compounds or mixtures thereof as described in US-Applications 2004/0164251 and 2004/0228963. In the method of applying a protecting parylene layer to phosphor or scintillator coatings as a "parylene layer" a halogen-containing layer is preferred. More preferably said "parylene layer" is selected from the group consisting of a parylene D, a parylene C and a parylene HT layer. In the particular case a cross-linked polymeric layer is advantageously formed on a phosphor screen material, wherein the said polymeric material layer has been formed by reaction of at least one component, thereby forming self-condensing polymers. Reactive monomers are provided in form of heated vapour in order to form the desired condensation polymer on the substrate, wherein said condensation polymer is in form of a p-xylylene or "parylene" layer on the phosphor screen substrate. Examples of these "parylene" layers are poly-p-xylylene (Parylene-N), poly-monochloro-p-xylylene (Parylene-C) and polydichloro-p-xylylene (Parylene-D). A pigment may be present in a thin film of a poly-p-xylylene as in JP-A 62-135520. Apart from a stimulable phosphor layer, a prompt emitting luminescent phosphor can be coated in the vapour depositing apparatus wherein the method of the present invention is applied. Such a luminescent phosphor is then suitable for use e.g. in intensifying screens as used in screen/film radiography.

With respect to specific applications, related with computed radiography (CR) and direct radiography (DR), it is clear that in view of image quality, and more particularly in view of sharpness, binderless phosphor or scintillator layers as described hereinbefore are preferred. With respect thereto it is clear that vaporisation of raw materials in the vapour depositing apparatus wherein the method of the present invention is applied, in order to build the desired scintillator or phosphor layers is a preferred technique, provided that the layers have been deposited on a flexible substrate, wherein it is envisaged to deform the flexible support in order to get a flat sheet or panel, ready-for-use, suitable for specific CR and DR applications. Other hygroscopic phosphor or scintillator layers besides the preferred CsBr:Eu phosphor that are advantageously prepared according to the method of the present invention are e.g. BaFCl:Eu, BaFBr:Eu and GdOBr:Tm, used in intensifying screens; CsI:Na applied in scintillator panels and storage phosphors suitable for use in CR as e.g. BaFBr:Eu, BaFI:Eu, (Ba,Sr)F(Br,I):Eu, RbBr:Tl, CsBr:Eu, CsCl:Eu and RbBr:Eu; or CsI:Tl, Lu₂O₂S:xM and Lu₂O₅Si:xM, wherein M is selected from the group of rare earth elements consisting of Eu, Pr and Sm and wherein x is from 0.0001 to 0.2, particularly suitable for use in DR-cassettes as disclosed in US-A's 2004/0262536 and 2005/0002490 respectively.

### Examples

While the present invention will hereinafter be described in connection with preferred embodiments thereof, it will be understood that it is not intended to limit the invention to those embodiments.

A CsBr:Eu photostimulable phosphor screen having a flexible anodised aluminum was prepared in a vacuum chamber by means of a thermal vapour deposition process, starting from a mixture of CsBr and EuOBr as raw materials. Said deposition process onto said flexible anodised aluminum support was performed in such a way that said support was rotating so that the momentary magnitude of the velocity was constant at each point of its area.

An electrically heated oven and a refractory tray or boat in which 160-200 g of a mixture of CsBr and EuOBr as raw materials in a 99.5%/0.5% CsBr/EuOBr percentage ratio by weight were present to become vaporised.

As a crucible use was made of an elongated boat having a length of 60 mm, a width of 45 mm and a height of 40 mm, composed of "tantalum" having a thickness of 0.5 mm. The 3 integrated parts thereof are: a crucible container, an internally heated chimney and a controllable outlet. The longitudinal parts were folded from one continuous tantalum base plate in order to overcome leakage and the head parts were welded.

Under vacuum pressure (a pressure of 2 x 10⁻¹ Pa equivalent with 2 x 10⁻³ mbar) maintained by a continuous inlet of argon gas into the vacuum chamber, and at a sufficiently high temperature of the vapour source (720°C) while said support was rotating over the vapour stream.

The anodised aluminum substrate support having a thickness of 280 µm, a width of 18 cm and a length of 24 cm, was positioned at the side whereupon the phosphor should be deposited at a distance of 22 cm between substrate and crucible vapour outlet slit.

In order to illustrate the effect of "over-annealing" explained hereinbefore, experiments summarised in Table 1 have been performed for storage phosphor plates having been prepared as set forth hereinbefore wherein a high speed (SAL%) was already attained for a europium dopant concentration in the range from about 200 p.p.m..

In that Table 1 besides R(elative) H(umidity) conditions while performing annealing (in calculated %RH as indicated in Table 1- 4th column), following 5th column is illustrative for absolute amounts of water, present per cubic meter, while performing said annealing conditions.

SAL% *¹ is illustrative for speed measured from scan average levels at a storage phosphor plate, without having subjected said plate to an annealing step and without having performed an ageing treatment in a conditioned room.

SAL% *² is illustrative for speed measured the same plate, after having been subjected said plate to an annealing step.

In the last column from Table 1 decay percentages were tabulated, indicating loss in speed as a result of performing an ageing treatment in a conditioned room during 144 hours at 35°C and 80%RH at a previously annealed plate, in the absence of any protective layer for said annealed plate.

**Table 1**

| No. CB-plate | Anneal t / T (h) (°C) | Eu p.p.m. | %RH ** | g H₂O per m³ ** | SAL % *¹ | SAL% *² | SAL % decay after **144 h 35°C/80%RH** *** |
|---|---|---|---|---|---|---|---|
| 52233/21 | 4/170 | 212 | 0.126 | 4.99 | 100 | 582 | 62.4 |
| 52233/22 | 4/170 | 212 | 0.120 | 4.75 | 97 | 587 | 68.3 |
| 52233/11 | 3,5/ 200 | 212 | 0.191 | 14.0 | 99 | 548 | 27.4 |
| 52233/12 | **5 / 200** | 212 | **0.191** | **14.0** | 101 | 528 | **17.2** |
| 52228/12 | 5 / 180 | 258 | 0.097 | 4.78 | 139 | 608 | 26.6 |

| | | | | | | | |
|---|---|---|---|---|---|---|---|
| ** %RH conditions while annealing / *** %RH conditions while ageing | | | | | | | |

In the even more severe ageing circumstances as in the Table 1, a decay of less than 25 %, and even less than 20 %, can only be attained if the desired conditions for over-annealing (exceeding reference time of 4 hours and reference temperature of 170°C) are fulfilled, although over-annealing may lead to a slight loss in initial SAL% (SAL%2) as illustrated e.g. when comparing the SAL%2 value from CB52233/12 (inventive)with those measured at CB52233/21 and CB52233/22 (comparatives).

In annealing conditions (e.g. 5 hours at 180°C as for CB52228/12) wherein amounts of water content, lower than 10 g/m³ of dry air, are present during said annealing, SAL% decay caused by an ageing treatment afterwards cannot be reduced to a level of less than 25 %, although time and temperature may be in favor of at least reducing said decay up to a level in the range from 25-30 %.

In order to reduce said decay up to a level of less than 20% in the evaluation procedure, i.e., as performed after an ageing treatment in severe circumstances without protecting the phosphor layer on the plate, i.e., without a protective covering layer, annealing time and temperature conditions should exceed standard annealing time (4 h) and/or standard temperature (170°C). It is shown to be preferable however to enhance the absolute water content up to more than 10 g of water content per cubic meter of dry air in the environment wherein the over-annealing step proceeds. This has never been taught before in patent literature.

As an advantageous effect it has been clearly shown in the examples of the present invention that, although an over-annealing step may lead to a SAL% exceeding the maximum attainable speed (compare e.g. CB-plate 52233/21 with CB-plate 52233/12), evaluation of that speed after an ageing treatment in conditions of high temperature and high relative humidity over a long time of several days as prescribed in the present invention leads to a remarkably better stability with respect to speed of the thus prepared storage phosphor plate as becomes reflected in speed decay obtained, even when said storage phosphor plate is not protected against moisture by a protective covering layer.

Having described in detail preferred embodiments of the current invention, it will now be apparent to those skilled in the art that numerous modifications can be made therein without departing from the scope of the invention as defined in the appending claims.

## Claims

1. Method of increasing humidity stability of a storage phosphor panel having a phosphor layer coated onto a support by vapour depositing raw phosphor precursor materials of a matrix and an activator component from one or more crucible(s) and/or crucible unit(s) in a vapour deposition apparatus, wherein after ending vapour depositing an additional over-annealing step is performed, wherein said step of "over-annealing" proceeds by annealing over a time exceeding a "reference annealing time" at a temperature exceeding a "reference annealing temperature", wherein said "reference annealing time" is 4 hours and wherein said "reference annealing temperature" is 170°C, **characterised in that** said step of "over-annealing" is performed in humidity conditions wherein more than 10 g of water per cubic meter of dry conditioning air is present.

2. Method according to claim 1, wherein in said step of over-annealing said temperature is at least 180°C and said time is at least 4.5 hours.

3. Method according to claim 1, wherein in said step of over-annealing said temperature is at least 200°C and said time is at least 5 hours.

4. Method according to any one of the claims 1 to 3, wherein said humidity stability expressed as percentage decay of speed is less than 25 %, wherein said decay is determined from differences in speed measured before and after an ageing treatment procedure in a conditioned atmosphere, defined by a relatively high temperature and humidity, without protective layer for said phosphor layer.

5. Method according to any one of the claims 1 to 3, wherein said humidity stability expressed as percentage decay of speed is less than 20 %, wherein said decay is determined from differences in speed measured before and after an ageing treatment procedure in a conditioned atmosphere, defined by a relatively high temperature and humidity, without protective layer for said phosphor layer.

6. Method according to any one of the claims 1 to 5, wherein said phosphor layer is coated with a protective layer.

7. Method according to any one of the claims 1 to 6, wherein said storage phosphor panel has an "activator coating weight number" of more than 7,000, wherein said "activator coating weight number" is defined as the product of average activator amount present in a storage phosphor layer of said panel, said amount being expressed in p.p.m. (µg/g) of activator versus matrix component, and weight of coated phosphor, expressed in mg/cm².

8. Method according to any one of the claims 1 to 6, wherein said storage phosphor panel reaches an "activator coating weight number" of more than 20,000, wherein said "activator coating weight number" is defined as the product of average activator amount present in a storage phosphor layer of said panel, said amount being expressed in p.p.m. (µg/g) of activator versus matrix component, and weight of coated phosphor, expressed in mg/cm².

9. Method according to any one of the claims 1 to 8, wherein said step of vapour depositing raw phosphor precursor materials is performed by a multi-evaporation step.

10. Method according to claim 9, wherein said multi-evaporation step is performed by replenishing said crucible(s) without a cleaning step inbetween.

11. Method according to any one of the claims 1 to 10 wherein said raw material precursor is CsX as a matrix component and EuX₂, EuX₃, EuOX or a mixture thereof as activator components, X representing Cl, Br, I or a combination thereof.

12. Method according to any one of the claims 1 to 10, wherein said raw precursor material is CsₓEu_{y}X'_{(x+αy)}, wherein x, y and α are integers, wherein x/y is more than 0.25 and wherein α is at least 2 and wherein X' represents Cl, Br, I or a combination thereof.

13. Method according to any one of the claims 1 to 12, wherein said storage phosphor is CsBr:Eu.

14. Method according to any one of the claims 1 to 13, wherein said vapour deposition proceeds in a batch process.

15. Method according to any one of the claims 1 to 13, wherein said vapour deposition proceeds in a continuous process.

16. Method according to any one of the claims 1 to 15, wherein vapour depositing said phosphor onto said support proceeds by a method selected from the group consisting of physical vapour deposition, chemical vapour deposition and an atomisation technique.
